# EUROPEAN PATENT SPECIFICATION

(11) **EP 2 402 835 B1**
(45) Date of publication and mention of the grant of the patent: **07.08.2019**
(21) Application number: 11171645.2
(22) Date of filing: 28.06.2011
(51) Int. Cl.: G05F 1/67

(54) **A maximum-power-point tracking device for a solar electric-generation system and a tracking method for the same**
Verfolgungsvorrichtung für den maximalen Leistungspunkt für ein solares Elektroerzeugungssystem und Verfolgungsverfahren dafür
Dispositif de suivi des points d'alimentation maximum pour système de génération électrique solaire et procédé de suivi correspondant

(30) Priority: 30.06.2010 CN 201010219102
(43) Date of publication of application: 04.01.2012
(73) Proprietor: Byd Company Limited, Shenzhen, Guangdong (CN)
(72) Inventor: Yin, Shaowen, 518118 SHENZHEN (CN); Zhang, Xiang, 518118 SHENZHEN (CN); Yang, Rongchun, 518118 SHENZHEN (CN)
(74) Representative: Gulde & Partner

(56) References cited:
- WO-A2-2010/093702
- US-A1- 2009 206 666
- AHMAD AL-DIAB ET AL: "Variable step size P&O MPPT algorithm for PV systems", 2010 12TH INTERNATIONAL CONFERENCE ON OPTIMIZATION OF ELECTRICAL AND ELECTRONIC EQUIPMENT, 1 May 2010 (2010-05-01), pages 1097-1102, XP55024142, DOI: 10.1109/OPTIM.2010.5510441 ISBN: 978-1-42-447019-8
- FANGRUI LIU ET AL: "A Variable Step Size INC MPPT Method for PV Systems", IEEE TRANSACTIONS ON INDUSTRIAL ELECTRONICS, IEEE SERVICE CENTER, PISCATAWAY, NJ, USA, vol. 55, no. 7, 1 July 2008 (2008-07-01), pages 2622-2628, XP011225538, ISSN: 0278-0046, DOI: 10.1109/TIE.2008.920550

## Description

### FIELD OF TECHNOLOGY

The present disclosure relates to solar energy, more particularly to a maximum power point tracking device of solar electric-generation system and tracking method of the same.

### BACKGROUND OF THE INVENTION

As is generally known, solar energy has reduced pollution and is readily available. But the conversion efficiency of solar batteries is too low, which may lead to the desirability of tracking the maximum power point. The output power of a solar battery is responsive to sunshine intensity and sunshine temperature, and for certain sunshine intensity and sunshine temperature, the maximum power outputted by the solar battery is definite. Thus, a method for improving the work efficiency of a solar battery may include controlling the solar battery to work in the maximum power point. In an instance in which the solar battery works on the maximum power point, the output voltage may be lower than the open circuit voltage, which may limit the range of the output voltage. At present, conventional solar electric-generation systems are unable to simultaneously track a maximum power point and expand an output voltage range of the maximum power point. Thus, the solar energy may be wasted.

US2009/0206666A1 discloses a distributed power harvesting system comprising: a plurality of DC power sources with respective DC outputs adapted for interconnection into an interconnected DC power source output; a converter including input terminals adapted for coupling to said interconnected DC power source output, a circuit loop setting the voltage and current at the input terminals of the converter according to predetermined criteria and a power conversion portion for converting the power received at the input terminals to an output power at the output terminals; and a power supplier coupled to the output terminals, the power supplier including a control part maintaining the input to the power supplier at a predetermined value.

"Variable Step Size P&O MPPT Algorithm for PV Systems" by Ahmad Al-Diab, Constantinos Sourkounis proposes a modified variable step size P&O MPPT algorithm, wherein the step size is automatically tuned according to the operating point. Compared with the conventional fixed step size method, the proposed approach can effectively improve the MPPT speed and efficiency simultaneously.

### SUMMARY

The present disclosure provides a maximum power point tracking device and a tracking method of the same for enlarging the range of the output power of the solar battery when tracking the maximum power point.

The present disclosure provides a maximum power point tracking device for a solar electric-generation system that includes a solar battery and a DC/DC converter connected to the solar battery. The maximum power point tracking device includes a sampling module electronically connected to an output terminal of the solar battery and configured to detect an output current value and an output voltage value of the solar battery. The device includes a controlling module connected to the sampling module and configured to: calculate a target current value according to the output current value and the output voltage value of the solar battery and a preset current value; and output a controlling signal for controlling the value of a current according to the output current of the solar battery and the target current value. The device also includes a driving module electronically connected to the DC/DC converter and the controlling module. The driving module is configured to: receive the controlling signal from the controlling module; and output a driving signal to adjust an output current value of the DC/DC converter close to the target current value, and to adjust an output power of the DC/DC converter. The controlling module is further configured to: set a preset current value IΔ, and output a first value M1 and a second value M2 according to the preset current value IΔ; detect a value of the output current of the solar battery, and process a first proportional-integral PI adjustment according to the first value M1 and the output current of the solar battery to calculate the duty cycle of the controlling signal for adjusting the output current of the solar electric-generation system within a predefined adjustment range of a first target current value, the first target current value for the first PI adjustment being calculated as an initial target value plus the first value M1, the first value M1 being equal to the preset current value IΔ; detect the output current and the output voltage of the solar battery after the first PI adjustment, and calculate a first output power P1 of the solar battery; detect a value of the output current of the solar battery, and process a second PI adjustment according to the second value M2, the output current of the solar battery and the first target current value to calculate the duty cycle of the controlling signal for adjusting the output current of the solar electric-generation system within a predefined adjustment range of a second target current value, the second target current value for the second PI adjustment being calculated as the first target value plus the second value M2, the second value M2 being equal to minus 2 times the preset current value IΔ; detect the output current and the output voltage of the solar battery after the second PI adjustment, and calculate a second output power P2 of the solar battery; compare the first output power P1 after the first PI adjustment and the second output P2 after the second PI adjustment, and calculate a third value M3 according to according to the comparison result and the preset current value IΔ; and detect the value of the output current of the solar battery, process a third PI adjustment according to the third value M3, the output current of the solar battery and the second target current value to calculate the duty cycle of the controlling signal for adjusting the output current of the solar electric-generation system within a predefined adjustment range of a third target current value, the third target current value for the third PI adjustment being calculated as the second target value plus the third value M3, the third value M3 being equal to IΔ+ k * abs(P2 - P1) in an instance in which P1 is greater than P2, wherein k is a coefficient and values range from 0 to 1, or equal to IΔ - k * abs(P2 - P1) in an instance in which P1 is less than or equal to P2. The controlling module is further configured to process the first PI adjustment, the second PI adjustment or the third PI adjustment by: calculating a target current value Io according to the first value M1, the second value M2, or the third value M3; calculating an input value Plin of the PI adjustment according to the target current value Io and the output current Iin of the solar battery, wherein PIin = Io - Iin; calculating a proportional PIper and an integration PIsum of the PI adjustment according to the input value PIin, wherein PIper = PIin * Kp, PIsum = PIin * Ki; calculating an output value PIout of the PI adjustment according to the Piper and the PIsum, wherein PIout = PIin + PIsum; and calculating the duty cycle of the controlling signal according to PIout.

The output current is adjusted to the target current value, preferably close to the target current value, i.e. within a predefined adjustment range. In other words, the output current is adjusted towards the target current value. Since it may numerically not be possible to adjust the output current value to exactly the target current value, the output current value is adjusted close to or within a vicinity of the target current value. Preferably, the difference between the target current value and the adjusted output current value is less than 20% of the target current value, more preferably less than 10%, even more preferably less than 5%.

The present disclosure further provides a method for tracking the maximum power of a solar electric-generation system. The method may include detecting an output current and an output voltage of a solar battery, and calculating a target current value according to the output current and the output voltage of the solar battery and a preset current value. And the method may include outputting a controlling signal for adjusting a value of an output current of the solar electric-generation system close to the target current value according to the output current of the solar battery and the preset current value. And the method may further comprises: setting a preset current value IΔ, and outputting a first value M1 and a second value M2 according to the preset current value IΔ; detecting a value of the output current of the solar battery, and processing a first proportional-integral PI adjustment according to the first value M1 and the output current of the solar battery to calculate the duty cycle of the controlling signal for adjusting the output current of the solar electric-generation system within a predefined adjustment range of a first target current value, the first target current value for the first PI adjustment being calculated as an initial target value plus the first value M1, the first value M1 being equal to the preset current value IΔ; detecting the output current and the output voltage of the solar battery after the first PI adjustment, and calculating a first output power P1 of the solar battery; detecting a value of the output current of the solar battery, and processing a second PI adjustment according to the second value M2, the output current of the solar battery and the first target current value to calculate the duty cycle of the controlling signal for adjusting the output current of the solar electric-generation system within a predefined adjustment range of a second target current value, the second target current value for the second PI adjustment being calculated as the first target value plus the second value M2, the second value M2 being equal to minus 2 times the preset current value IΔ; detecting the output current and the output voltage of the solar battery after the second PI adjustment, and calculating a second output power P2 of the solar battery; comparing the first output power P1 after the first PI adjustment and the second output power P2 after the second PI adjustment, and calculating a third value M3 according to according to the comparison result and the preset current value IΔ; and detecting the value of the output current of the solar battery, processing a third PI adjustment according to the third value M3, the output current of the solar battery and the second target current value to calculate the duty cycle of the controlling signal for adjusting the output current of the solar electric-generation system within a predefined adjustment range of a third target current value, the third target current value for the third PI adjustment being calculated as the second target value plus the third value M3, the third value M3 being equal to IΔ+ k * abs(P2 - P1) in an instance in which P1 is greater than P2, wherein k is a coefficient and values range from 0 to 1, or equal to IΔ - k * abs(P2 - P1) in an instance in which P1 is less than or equal to P2. And the method may further include: calculating a target current value Io according to the first value M1, the second value M2, or the third value M3; calculating an input value PIin of the PI adjustment according to the target current value Io and the output current Iin of the solar battery, wherein PIin = Io - Iin; calculating a proportional Piper and an integration Plsum of the PI adjustment according to the input value PIin, wherein PIper = PIin * Kp, PIsum = PIin * Ki; calculating an output value PIout of the PI adjustment according to the Piper and the PIsum, wherein PIout = PIin + PIsum; and calculating the duty cycle of the controlling signal according to PIout.

The maximum power point tracking device for the solar electric-generation system and the tracking method for the same provided by the present disclosure may calculate the target current value according to the output current and the output voltage of the solar battery and the preset current value to make the solar battery to work in the maximum power point; and adjust the value of the output voltage of the solar battery according to the DC/DC converter to track a maximum power point and expand an output voltage range of the maximum power point at the same time.

### BRIEF DESCRIPTION OF THE DRAWINGS

Having thus described example embodiments of the present disclosure in general terms, reference will now be made to the accompanying drawings, which are not necessarily drawn to scale, and wherein:
FIG. 1 is a structure diagram of a maximum power point tracking device for a solar electric-generation system according to an example embodiment of the disclosure;
FIG. 2 is a structure diagram of a maximum power point tracking device for a solar electric-generation system according to an example embodiment of the disclosure;
FIG. 3 is a circuit diagram of a DC/DC converter according to an example embodiment of the disclosure;
FIG. 4 is a flow diagram of a tracking method for a solar electric-generation system according to an example embodiment of the disclosure;
FIG. 5 is a flow diagram of a PI (proportional-integral) adjustment method according to an example embodiment of the disclosure; and
FIG. 6 is a flow diagram of a tracking method for a solar electric-generation system according to another example embodiment of the disclosure.

### DETAILED DESCRIPTION OF THE PREFERRED EMBODIMENT

The present disclosure now will be described more fully with reference to the accompanying drawings, in which some, but not all embodiments of the disclosure are shown. This disclosure may be embodied in many different forms and should not be construed as limited to the embodiments set forth. Like numbers refer to like elements throughout.Terms such as "substantially," "about," "nearly," "approximately" or the like as used in referring to a relationship between two objects or values are intended to reflect not only an exact relationship but also variances in that relationship that may be due to various factors such as common or accepted error tolerances, variations or the like. It should further be understood that although some values or other relationships may be expressed herein without a modifier, these values or other relationships may also be exact or may include a degree of variation due to various factors such as common or accepted error tolerances, risk tolerances, variations or the like.

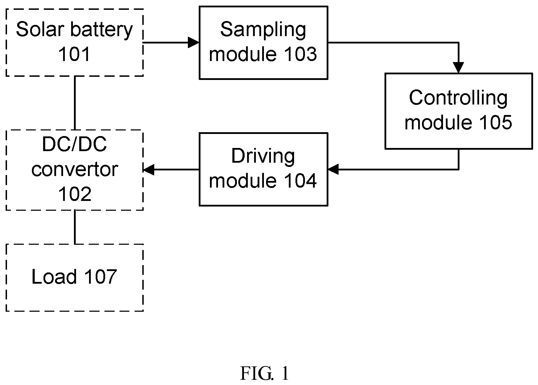

As shown in FIG. 1, according to an example embodiment of the present disclosure, a maximum-power-point tracking MPPT device for a solar electric-generation system is provided. As shown, the device includes a solar battery 101 and a DC/DC converter 102 connected to the solar battery 101. The device also includes a sampling module 103 electronically connected to an output terminal of the solar battery 101 and configured to detect an output current value and an output voltage value of the solar battery 101. A controlling module 105 is connected to the sampling module 103 and configured to calculate a target current value according to the output current and voltage values of the solar battery 101 and a preset current value, and output a controlling signal according to the output current of the solar battery 101 and the target current value. A driving module 104 is electronically connected to the DC/DC converter 102 and the controlling module 105. The driving module 104 is configured to receive the controlling signal from the controlling module 105; and output a driving signal to adjust an output current value of the solar battery 101 close to the target current value, and to adjust an output power of the DC/DC converter 102.

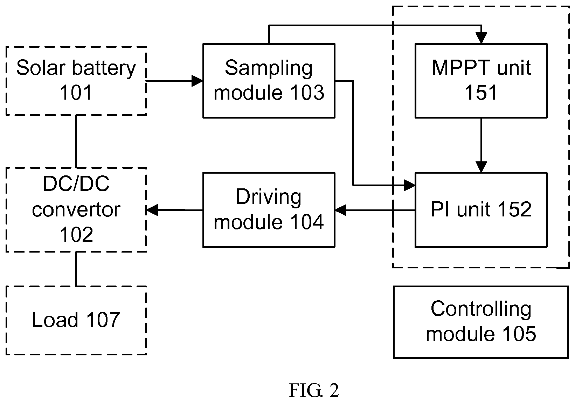

As shown in FIG. 2, according to an example embodiment of the present disclosure, the controlling module 105 may include a MPPT unit 151 connected to the sampling module 103, and a proportional-integral (PI) unit 152 connected to the MPPT unit 151, the sampling module 103 and the driving module 104. The MPPT unit 151 is configured to calculate the output power of the solar battery 101 according to the output voltage and the output current of the solar battery 101, and change the output value of the MPPT unit 151 according to the output power and the preset current value. The PI unit 152 is configured to calculate the target current value according to the output value of the MPPT unit 151, calculate a duty cycle of the controlling signal according to the target current value and the output current of the solar battery 101, and output the controlling signal for controlling the value of a current.

The sampling module 103 may include a voltage sensor and a current sensor for detecting the value of the output voltage and the output current of the solar battery 101.

The DC/DC converter 102 may be a bidirectional DC/DC converter including a first positive terminal U1+, a second positive terminal U2+, a first negative terminal U1- and a second negative terminal U2-. The output voltage of the maximum power point of the solar battery 101 may be boosted or bucked via the bidirectional DC/DC converter for expanding the output voltage range of the maximum power point.

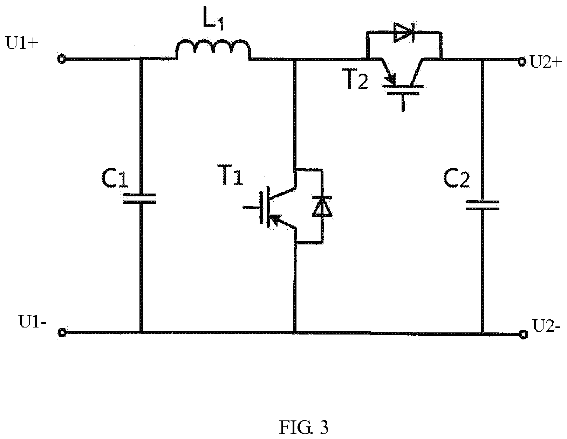

As shown in FIG. 3, according an example embodiment of the present disclosure, a bidirectional DC/DC converter may be implemented by a circuit including a first positive terminal U1+ connected to one end of an inductor L1 and one end of a first capacitor C1. Another end of the inductor L1, in turn, is connected to a drain of a first transistor T1 and a source of a second transistor T2. A source of the first transistor T1 and another end of the first capacitor C1 are connected to the first negative terminal U1- and the second negative terminal U2-.

As also shown in FIG. 3, a drain of the second transistor T2 is connected to the second positive terminal U2+ and one end of a second capacitor C2. Another end of the second capacitor C2 is connected to the first negative terminal U1- and the second negative terminal U2-. And a gate of the first transistor T1 and a gate of the second transistor T2 are connected to the output terminal of the driving module 104. In operation, the turn-on time of the first transistor T1 and the second transistor T2 may be controlled by a driving signal of the driving module 104. In an instance in which the first transistor T1 is ON, the second transistor T2 is OFF. And in an instance in which the first transistor T1 is OFF, the second transistor T2 is ON.

In an instance in which the first positive terminal U1+ and the first negative terminal U1- of the DC/DC converter 102 are connected to the solar battery (101), and the second positive terminal U2+ and the second negative terminal U2- of the DC/DC converter 102 are connected to a load 107, the DC/DC converter may boost to the voltage of the solar battery 101 to control the first transistor T1 ON and the second transistor T2 OFF. In an instance in which the second positive terminal U2+ and the second negative terminal U2- of the DC/DC converter 102 are connected to the solar battery 101, and the first positive terminal U1+ and the first negative terminal U1- of the DC/DC converter 102 are connected to a load 107, the DC/DC converter may buck to the voltage of the solar battery 101 to control the first transistor T1 ON and the second transistor T2 OFF. This may expand an output voltage range of the maximum power point.

The present disclosure further provides a method for tracking the maximum power of a solar electric-generation system. The method may include detecting an output current and an output voltage of a solar battery 101, and calculating a target current value according to the output current and the output voltage of the solar battery 101 and a preset current value. The method may also include outputting a controlling signal for adjusting a value of an output current of the solar electric-generation system close to the target current value according to the output current of the solar battery 101 and the preset current value.

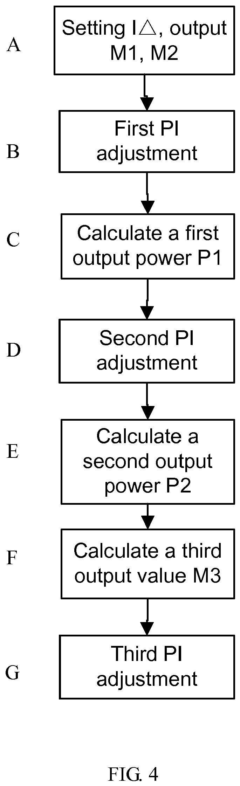

As shown in FIG. 4, a tracking method for a solar electric-generation system is also provided according to an example embodiment of the disclosure. As shown at step A), the tracking method includes setting a preset current value IΔ, and outputting a first value M1 and a second M2 according to the preset current value IΔ. At step B), the method includes detecting a value of the output current of the solar battery 101, and processing a first PI adjustment according to the first value M1 and the output current of the solar battery 101 to calculate the duty cycle of the controlling signal for adjusting the output current of the solar electric-generation system close to a first target current value.

At step C), the method includes detecting the output current and the output voltage of the solar battery 101 after the first PI adjustment, and calculating a first output power P1 of the solar battery 101.

At step D), the method includes detecting a value of the output current of the solar battery 101, and processing a second PI adjustment according to the second value M2, the output current of the solar battery 101 and the first target current value to calculate the duty cycle of the controlling signal for adjusting the output current of the solar electric-generation system close to a second target current value.

At step E), the method includes detecting the output current and the output voltage of the solar battery 101 after the second PI adjustment, and calculating a second output power P2 of the solar battery 101.

At step F), the method includes comparing the first output power P1 after the first PI adjustment and the second adjustment, and calculating a third output value M3 according to the comparison result and the preset current value IΔ.

And at step G), the method includes detecting the value of the output current of the solar battery 101, and processing a third PI treatment according to the third output value M3, the output current of the solar battery 101 and the second target current value to calculate the duty cycle of the controlling signal for adjusting the output current of the solar electric-generation system close to a third target current value.

In an instance in which the output value of the MPPT unit 151 is positive, the MPPT unit 151 runs a positive disturbance; and in an instance in which the output value of the MPPT unit 151 is negative, the MPPT unit 151 runs a negative disturbance. In the tracking method, M1 = IΔ and M2 = -2IΔ. This may ensure that the amplitude of the positive disturbance is equal to the amplitude of the negative disturbance. In other terms, M1 being equal to IΔ and M2 being equal to -2IΔ may make the positive trend and negative trend of the current in a same range at first, and then exactly track the maximum power point of the solar battery 101 according to a change of the output power of the solar battery 101. Conversely, the tracking method may run a negative disturbance at first, and then run a positive disturbance, where accordingly, M1 = -IΔ and M2 = 2IΔ.

Generally, the output voltage and the output current of the solar battery 101 may be changed in real-time, so the maximum power point of the solar battery 101 may not track exactly in a certain time range. In the present disclosure, the maximum power point current may be detected by disturbance, and the output current of the solar battery 101 may steadily flow in a certain time range by PI adjustment for exactly tracking a maximum power point of the solar battery 101 in the certain time range. In other terms, the turn-on time of the first transistor T1 and/or the second transistor T2 may be controlled by adjusting the duty cycle of the control signal of the control module. In this regard, the value of the output current of the solar battery 101 may be adjusted by adjusting the value of the load of the solar battery 101 for making the output current of the solar battery 101 to keep stable after disturbance.

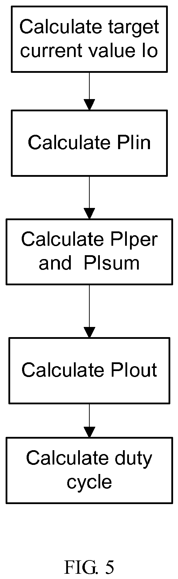

As shown in FIG. 5, example embodiments may also provide a method of PI adjustment. As shown, this method may include calculating a target current value Io according to the first value M1 and the second M2. The method may also include calculating an input value PIin of the PI adjustment according to the target current value Io and the output current Iin of the solar battery 101, where PIin = Io - Iin. In addition, the method may include calculating a proportional PIper and an integration PIsum of the PI adjustment according to the input value PIin, where PIper = PIin * Kp, PIsum = PIin * Ki. The method may include calculating an output value PIout of the PI adjustment according to the PIper and the PIsum, where PIout = PIin + PIsum. And the method may include calculating the duty cycle of the controlling signal according to PIout.

In the PI adjustment method, the duty cycle may be equal to PIout divided by a constant value K. The constant value K may be in the range of 2000-3000, and may vary with the voltage class of the system. When Plout is calculated, the constant value K may be limited to less than or equal to 3000. And in an instance in which the calculated value is greater than 3000, the constant value K may be limited to 3000.

The maximum power point of the solar battery 101 may be variable, and in such instances, only by a ceaseless disturbance, the solar battery 101 may work in the maximum power point. The tracking method may include comparing an output power of the solar battery 101 after a positive disturbance, with an output power of the solar battery 101 after a negative disturbance. In one instance, the difference between the output power of the solar battery 101 after the positive disturbance, and the output power of the solar battery 101 after the negative disturbance, is relatively large. In this instance, a speed of the adjustment to the target current value in the third PI adjustment is relatively fast, and the current value obtained by the third PI adjustment is relatively large. Conversely, in another instance, the difference between the output power of the solar battery 101 after positive disturbance, and the output power of the solar battery 101 after negative disturbance, is relatively small. In this other instance, a speed of the adjustment of the target current value of the third PI adjustment is relatively slow, and the current value obtained by the third PI adjustment is relatively small. This may reduce the tracking time early in tracking the maximum power, and increase the tracking stability later in tracking maximum power. And the stable maximum power may be outputted by the third PI adjustment.

The effect of the first PI adjustment and the second PI adjustment may be disturbance, so the step size of the first PI adjustment and the second PI adjustment may be small, for example, IΔ = 3 Amps. Early in the PI adjustment, a small disturbance may cause large power change, so the difference between the two disturbances may increase and cause the target current value Io of the third PI adjustment to increase fast. Later in the PI adjustment, a small disturbance may cause a small power change, so the difference between the two disturbances may decrease and cause the target current value Io of the third PI adjustment to increase slowly.

In an instance in which the output power of the solar battery 101 after positive disturbance is equal to the output power of the solar battery 101 after negative disturbance, the DC/DC converter may steadily work in the maximum power point. Thus, the step F of the tracking method may include setting the third output value M3 equal to IΔ + k * abs(P2-P1) in an instance in which P1 is greater than P2, or setting the third output value M3 equal to IΔ - k * abs(P2-P1) in an instance in which P1 is less than or equal to P2. In the preceding, k is a coefficient whose values range from 0 to 1, and abs (P2-P1) refers to the absolute of the difference.

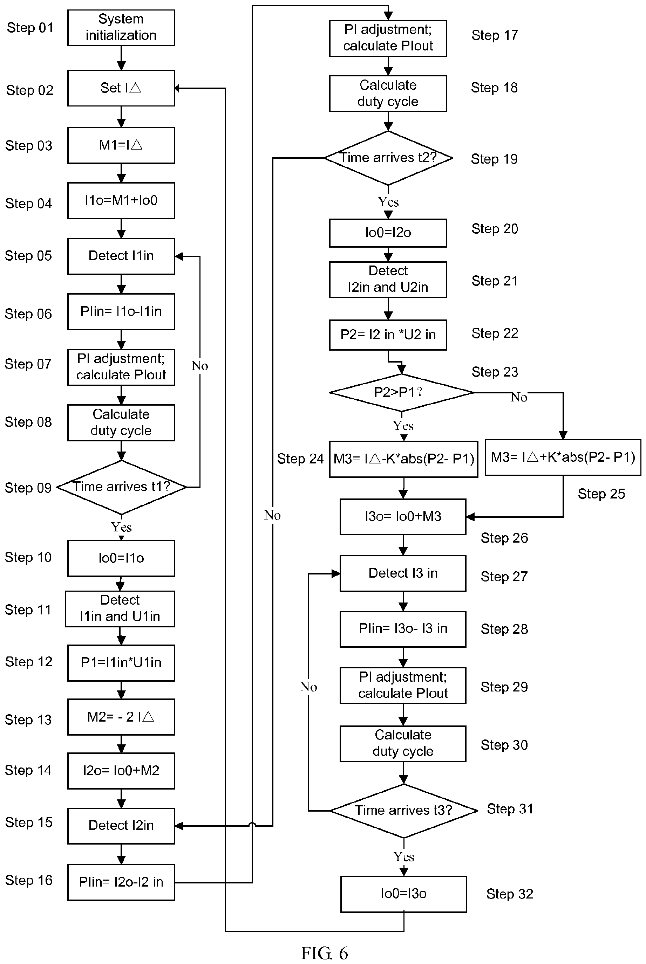

Reference is now made to FIG. 6, which illustrates a tracking method for solar electric generation according to another example embodiment of the disclosure. As shown at steps 01 and 02, the method includes system initialization and setting a preset current value IΔ. At step 03, the method includes MPPT unit 151 running a positive disturbance, and thereafter calculating an output value M1 = IΔ.

At step 04, the method includes calculating a target current value I1o according to M1, where I1o = M1 + I0o, and I0o is a initial target current value, which is preferably zero.

At step 05, the method includes detecting a present output current of the solar battery 101 I1in; and at step 06, the method includes calculating an input value PI1in of the PI adjustment according to the target current value I1o and the output current I1in of the solar battery 101, where PI1in = I1o - I1in.

At step 07, the method includes running a PI adjustment, calculating a proportional Piper and an integration PIsum of the PI adjustment according to the input value PIin, and calculating an output value PIout of the PI adjustment according to the PIper and the PIsum, where PIper = PIin * Kp, PIsum = PIin * Ki and PIout = PIin + PIsum.

At step 08, the method includes calculating the duty cycle of the controlling signal according to PIout for adjusting the output current of the solar battery 101 close to the I1o; and at step 09, the method includes judging whether the time lapsed exceeds a first reference value t1 or not. If not, return to step 05, and if yes, enter step 10. At step 10, then, the method includes recording an initial value I0o of the present target current value, where I0o = I1o.

At step 11, the method includes detecting a present output current I1in of the solar battery 101 and a present output voltage U1in of the solar battery 101; and at step 12, the method includes calculating and recording a present output power P1 of the solar battery 101, where P1= I1in * U1in.

At step 13, the method includes the MPPT unit 151 running a negative disturbance, and thereafter calculating an output value M2 = -2IΔ.

At step 14, the method includes calculating a target current value I2o according to M2; wherein I2o = M2 + I0o.

At step 15, the method includes detecting a present output current of the solar battery 101 I2in; and at step 16, the method includes calculating an input value PIin of the PI adjustment according to the target current value I2o and the output current I2in of the solar battery 101, wherein PIin = I2o - I2in.

At step 17, the method includes running a PI adjustment, calculating a proportional PIper and an integration PIsum of the PI adjustment according to the input value PIin, calculating an output value PIout of the PI adjustment according to the PIper and the PIsum, where PIper = PIin * Kp, PIsum = PIin * Ki and PIout = PIin + PIsum.

At step 18, the method includes calculating the duty cycle of the controlling signal according to PIout for adjusting the output current of the solar battery 101 close to the I2o; and at step 19, the method includes judging whether the time lapsed exceeds a second reference value t2 or not. If not, return to step 15; but if yes, enter step 20. At step 20, then, the method includes recording an initial value I0o of the present target current value, where I0o = I2o.

At step 21, the method includes detecting a present output current I2in of the solar battery 101 and a present output voltage U2in of the solar battery 101; and at step 22, the method includes calculating and recording a present output power P2 of the solar battery 101, where P2 = I2in * U2in.

At step 23, the method includes comparing whether P2 is greater than P1. If yes, then enter step 24; but if not, enter step 25. At steps 24 and 25, the method includes calculating a third output value M3. At step 24, M3 = IA - k * abs(P2 - P1); and at step 25, M3 = IΔ + k * abs(P2 - P1). After either step, the method may then proceed to step 26.

At step 26, the method includes calculating a target current value I3o according to M2; where I3o = M3 + I0o.

At step 27, the method includes detecting a present output current of the solar battery 101, I3in; and at step 28, the method includes calculating an input value Plin of the PI adjustment according to the target current value I3o and the output current I3in of the solar battery 101, where PIin = I3o - I3in.

At step 29, the method includes running PI adjustment, calculating a proportional Piper and an integration Plsum of the PI adjustment according to the input value PIin, calculating an output value PIout of the PI adjustment according to the PIper and the PIsum, where PIper = PIin * Kp, PIsum = PIin * Ki and PIout = PIin + PIsum.

At step 30, the method includes calculating the duty cycle of the controlling signal according to PIout for adjusting the output current of the solar battery 101 close to the I3o; and at step 31, the method includes judging whether the time lapsed exceeds a third reference value t3 or not. If not, return to step 27; but if yes, enter step 32. At step 32, then, the method includes recording an initial value I0o of the present target current value, and returning step 02, where I0o = I3o.

In the above mentioned steps, the first reference value t1, the second reference value t2 and the third reference value t3 of one example are about 1 second. The values of the first reference value t1, the second reference value t2 and the third reference value t3 are changeable. In an instance in which the values are too small, the computational complexity of the control module may be increased; or in an instance in which the values are too large, the solar battery 101 may not be adjusted to work in the maximum power point.

Also in the above mentioned steps, the target current value Io may be cumulatively calculated. For example, in step 04, I1o = M1+ I0o, so I1o = IΔ+ I0o, where I0o = 0, so I1o = IΔ. Also, for example, in the step 14, I2o = I0o + M2, M2 = -2IΔ, so I2o = -2IΔ + I0o, where I0o = I1o = IΔ, so I2o = -IΔ. And in the step 26, for example, I3o = I0o + M3, M3 = IΔ - k * abs(P2 - P1) or M3 = IΔ + k * abs(P2 - P1), so I3o = I0o + IΔ - k * abs(P2 - P1) or I3o = I0o + IΔ + k * abs(P2 - P1), where I0o = I2o = -IΔ, so I3o = -k * abs(P2 - P1) or I3o = k * abs(P2 - P1).

Even further, in step 07, Kp may be a proportional coefficient, Ki may be an integral coefficient, and the value range of Kp and Ki may be known to the person skilled in the art.

## Claims

1. A maximum-power-point tracking device for a solar electric-generation system that includes a solar battery (101) and a DC/DC converter (102) connected to the solar battery (101), the maximum-power-point tracking device comprising:
a sampling module (103) electronically connected to an output terminal of the solar battery (101) and configured to detect an output current value and an output voltage value of the solar battery (101);
a controlling module (105) connected to the sampling module (103) and configured to:
calculate a target current value according to the output current value and the output voltage value of the solar battery (101) and a preset current value; and
output a controlling signal for controlling the value of a current according to the output current of the solar battery (101) and the target current value; and
a driving module (104) electronically connected to the DC/DC converter (102) and the controlling module (105), wherein the driving module (104) is configured to:
receive the controlling signal from the controlling module (105); and
output a driving signal to the DC/DC converter (102) to adjust an output current value of the solar battery (101) within a predefined adjustment range of the target current value, and to adjust an output power of the DC/DC converter (102).
**characterized in that** the controlling module (105) is further configured to:
set a preset current value IΔ, and output a first value M1 and a second value M2 according to the preset current value IΔ;
detect a value of the output current of the solar battery (101), and process a first proportional-integral PI adjustment according to the first value M1 and the output current of the solar battery (101) to calculate the duty cycle of the controlling signal for adjusting the output current of the solar electric-generation system within a predefined adjustment range of a first target current value, the first target current value for the first PI adjustment being calculated as an initial target value plus the first value M1, the first value M1 being equal to the preset current value IΔ;
detect the output current and the output voltage of the solar battery (101) after the first PI adjustment, and calculate a first output power P1 of the solar battery (101);
detect a value of the output current of the solar battery (101), and process a second PI adjustment according to the second value M2, the output current of the solar battery (101) and the first target current value to calculate the duty cycle of the controlling signal for adjusting the output current of the solar electric-generation system within a predefined adjustment range of a second target current value, the second target current value for the second PI adjustment being calculated as the first target value plus the second value M2, the second value M2 being equal to minus 2 times the preset current value IΔ;
detect the output current and the output voltage of the solar battery (101) after the second PI adjustment, and calculate a second output power P2 of the solar battery (101);
compare the first output power P1 after the first PI adjustment and the second output P2 after the second PI adjustment, and calculate a third value M3 according to according to the comparison result and the preset current value IΔ; and
detect the value of the output current of the solar battery (101), process a third PI adjustment according to the third value M3, the output current of the solar battery (101) and the second target current value to calculate the duty cycle of the controlling signal for adjusting the output current of the solar electric-generation system within a predefined adjustment range of a third target current value, the third target current value for the third PI adjustment being calculated as the second target value plus the third value M3, the third value M3 being equal to IΔ+ k * abs(P2 - P1) in an instance in which P1 is greater than P2, wherein k is a coefficient and values range from 0 to 1, or equal to IΔ - k * abs(P2 - P1) in an instance in which P1 is less than or equal to P2,
wherein the controlling module (105) is further configured to process the first PI adjustment, the second PI adjustment or the third PI adjustment by:
calculating a target current value Io according to the first value M1, the second value M2, or the third value M3;
calculating an input value PIin of the PI adjustment according to the target current value Io and the output current Iin of the solar battery (101), wherein PIin = Io - Iin;
calculating a proportional PIper and an integration PIsum of the PI adjustment according to the input value PIin, wherein PIper = PIin * Kp, PIsum = PIin * Ki;
calculating an output value PIout of the PI adjustment according to the Piper and the PIsum, wherein PIout = PIin + PIsum; and
calculating the duty cycle of the controlling signal according to PIout.

2. A method for tracking the maximum power of a solar electric-generation system, the method comprising:
detecting an output current and an output voltage of a solar battery (101);
calculating a target current value according to the output current and the output voltage of the solar battery (101) and a preset current value; and
outputting a controlling signal for adjusting a value of an output current of the solar electric-generation system within a predefined adjustment range of the target current value according to the output current of the solar battery (101) and the preset current value,
**characterized in that** the method further comprises:
setting a preset current value IΔ, and outputting a first value M1 and a second value M2 according to the preset current value IΔ;
detecting a value of the output current of the solar battery (101), and processing a first proportional-integral PI adjustment according to the first value M1 and the output current of the solar battery (101) to calculate the duty cycle of the controlling signal for adjusting the output current of the solar electric-generation system within a predefined adjustment range of a first target current value, the first target current value for the first PI adjustment being calculated as an initial target value plus the first value M1, the first value M1 being equal to the preset current value IΔ;
detecting the output current and the output voltage of the solar battery (101) after the first PI adjustment, and calculating a first output power P1 of the solar battery (101);
detecting a value of the output current of the solar battery (101), and processing a second PI adjustment according to the second value M2, the output current of the solar battery (101) and the first target current value to calculate the duty cycle of the controlling signal for adjusting the output current of the solar electric-generation system within a predefined adjustment range of a second target current value, the second target current value for the second PI adjustment being calculated as the first target value plus the second value M2, the second value M2 being equal to minus 2 times the preset current value IΔ;
detecting the output current and the output voltage of the solar battery (101) after the second PI adjustment, and calculating a second output power P2 of the solar battery (101);
comparing the first output power P1 after the first PI adjustment and the second output power P2 after the second PI adjustment, and calculating a third value M3 according to according to the comparison result and the preset current value IΔ; and
detecting the value of the output current of the solar battery (101), processing a third PI adjustment according to the third value M3, the output current of the solar battery (101) and the second target current value to calculate the duty cycle of the controlling signal for adjusting the output current of the solar electric-generation system within a predefined adjustment range of a third target current value, the third target current value for the third PI adjustment being calculated as the second target value plus the third value M3, the third value M3 being equal to IΔ+ k * abs(P2 - P1) in an instance in which P1 is greater than P2, wherein k is a coefficient and values range from 0 to 1, or equal to IΔ - k * abs(P2 - P1) in an instance in which P1 is less than or equal to P2,
wherein the first PI adjustment, the second PI adjustment or the third PI adjustment comprises:
calculating a target current value Io according to the first value M1, the second value M2, or the third value M3;
calculating an input value PIin of the PI adjustment according to the target current value Io and the output current Iin of the solar battery (101), wherein PIin = Io - Iin;
calculating a proportional PIper and an integration PIsum of the PI adjustment according to the input value PIin, wherein PIper = PIin * Kp, PIsum = PIin * Ki;
calculating an output value PIout of the PI adjustment according to the PIper and the PIsum, wherein PIout = PIin + PIsum; and
calculating the duty cycle of the controlling signal according to PIout.

## Patentansprüche

1. Vorrichtung zum Auffinden eines maximalen Leistungspunkts für ein Solarstromerzeugungssystem, das eine Solarbatterie (101) und einen mit der Solarbatterie (101) verbundenen Gleichspannungswandler (102) beinhaltet, wobei die Vorrichtung zum Auffinden eines maximalen Leistungspunkts Folgendes umfasst:
ein Abtastmodul (103), das elektronisch mit einem Ausgangsanschluss der Solarbatterie (101) verbunden ist und dafür ausgelegt ist, einen Ausgangsstromwert und einen Ausgangsspannungswert der Solarbatterie (101) zu erfassen;
ein Steuermodul (105), das mit dem Abtastmodul (103) verbunden ist und dafür ausgelegt ist:
gemäß dem Ausgangsstromwert und dem Ausgangsspannungswert der Solarbatterie (101) und einem voreingestellten Stromwert einen Sollstromwert zu berechnen; und
gemäß dem Ausgangsstrom der Solarbatterie (101) und dem Sollstromwert ein Steuersignal zum Steuern des Wertes eines Stroms auszugeben; und
ein Treibermodul (104), das elektronisch mit dem Gleichspannungswandler (102) und dem Steuermodul (105) verbunden ist, wobei das Treibermodul (104) dafür ausgelegt ist:
das Steuersignal von dem Steuermodul (105) zu empfangen; und
ein Treibersignal an den Gleichspannungswandler (102) auszugeben, um einen Ausgangsstromwert der Solarbatterie (101) innerhalb eines vorgegebenen Einstellbereichs des Sollstromwertes anzupassen und eine Ausgangsleistung des Gleichspannungswandlers (102) anzupassen,
**dadurch gekennzeichnet, dass** das Steuermodul (105) ferner dafür ausgelegt ist:
einen voreingestellten Stromwert IΔ einzustellen und gemäß dem voreingestellten Stromwert IΔ einen ersten Wert M1 und einen zweiten Wert M2 auszugeben;
einen Wert des Ausgangsstroms der Solarbatterie (101) zu erfassen und gemäß dem ersten Wert M1 und dem Ausgangsstrom der Solarbatterie (101) eine erste proportional-integrale PI-Anpassung zu verarbeiten, um das Tastverhältnis des Steuersignals zum Anpassen des Ausgangsstroms des Solarstromerzeugungssystems innerhalb eines vorgegebenen Einstellbereichs eines ersten Sollstromwertes anzupassen, wobei der erste Sollstromwert für die erste PI-Anpassung als ein anfänglicher Sollwert zuzüglich des ersten Wertes M1 berechnet wird, wobei der erste Wert M1 gleich dem voreingestellten Stromwert IΔ ist;
den Ausgangsstrom und die Ausgangsspannung der Solarbatterie (101) nach der ersten PI-Anpassung zu erfassen und eine erste Ausgangsleistung P1 der Solarbatterie (101) zu berechnen;
einen Wert des Ausgangsstroms der Solarbatterie (101) zu erfassen und gemäß dem zweiten Wert M2, dem Ausgangsstrom der Solarbatterie (101) und dem ersten Sollstromwert eine zweite PI-Anpassung zu verarbeiten, um das Tastverhältnis des Steuersignals zum Anpassen des Ausgangsstroms des Solarstromerzeugungssystems innerhalb eines vorgegebenen Einstellbereichs eines zweiten Sollstromwertes zu berechnen, wobei der zweite Sollstromwert für die zweite PI-Anpassung als der erste Sollstromwert zuzüglich des zweiten Wertes M2 berechnet wird, wobei der zweite Wert M2 gleich -2 mal dem voreingestellten Stromwert IΔ ist;
den Ausgangsstrom und die Ausgangsspannung der Solarbatterie (101) nach der zweiten PI-Anpassung zu erfassen und eine zweite Ausgangsleistung P2 der Solarbatterie (101) zu berechnen;
die erste Ausgangsleistung P1 nach der ersten PI-Anpassung und die zweite Ausgangsleistung P2 nach der zweiten PI-Anpassung zu vergleichen und gemäß dem Vergleichsergebnis und dem voreingestellten Stromwert IΔ einen dritten Wert M3 zu berechnen; und
den Wert des Ausgangsstroms der Solarbatterie (101) zu erfassen, eine dritte PI-Anpassung gemäß dem dritten Wert M3, dem Ausgangsstrom der Solarbatterie (101) und dem zweiten Sollstromwert zu verarbeiten, um das Tastverhältnis des Steuersignals zum Anpassen des Ausgangsstroms des Solarstromerzeugungssystems innerhalb eines vorgegebenen Einstellbereichs eines dritten Sollstromwertes zu berechnen, wobei der dritte Sollstromwert für die dritte PI-Anpassung als der zweite Sollwert zuzüglich des dritten Wertes M3 berechnet wird, wobei der dritte Wert M3, in einem Fall, in dem P1 größer als P2 ist, gleich IΔ + k * abs(P2 - P1) ist, wobei k ein Koeffizient ist und Werte im Bereich 0 bis 1 liegen, oder, in einem Fall, in dem P1 kleiner als oder gleich P2 ist, gleich IΔ - k * abs(P2 - P1) ist,
wobei das Steuermodul (105) ferner dafür ausgelegt ist, die erste PI-Anpassung, die zweite PI-Anpassung oder die dritte PI-Anpassung zu verarbeiten durch:
Berechnen eines Sollstromwertes Io gemäß dem ersten Wert M1, dem zweiten Wert M2 oder dem dritten Wert M3;
Berechnen eines Eingangswertes PIin der PI-Anpassung gemäß dem Sollstromwert Io und dem Ausgangsstrom Iin der Solarbatterie (101), wobei PIin = Io - Iin;
Berechnen eines proportionalen PIper und eines integralen PIsum der PI-Anpassung gemäß dem Eingangswert PIin, wobei PIper = PIin * Kp, PIsum = PIin * Ki;
Berechnen eines Ausgangswertes PIout der PI-Anpassung gemäß dem PIper und dem PIsum, wobei PIout = PIin + PIsum; und
Berechnen des Tastverhältnisses des Steuersignals gemäß PIout.

2. Verfahren zum Auffinden der Maximalleistung eines Solarstromerzeugungssystems, das Verfahren umfassend:
Erfassen eines Ausgangsstroms und einer Ausgangsspannung einer Solarbatterie (101);
Berechnen eines Sollstromwertes gemäß dem Ausgangsstrom und der Ausgangsspannung der Solarbatterie (101) und einem voreingestellten Stromwert; und
Ausgeben eines Steuersignals zum Anpassen eines Wertes eines Ausgangsstroms des Solarstromerzeugungssystems innerhalb eines vorgegebenen Einstellbereichs des Sollstromwertes gemäß dem Ausgangsstrom der Solarbatterie (101) und dem voreingestellten Stromwert,
**dadurch gekennzeichnet, dass** das Verfahren ferner umfasst:
Einstellen eines voreingestellten Stromwertes IΔ und Ausgeben eines ersten Wertes M1 und eines zweiten Wertes M2 gemäß dem voreingestellten Stromwert IΔ;
Erfassen eines Wertes des Ausgangsstroms der Solarbatterie (101) und Verarbeiten einer ersten proportional-integralen PI-Anpassung gemäß dem ersten Wert M1 und dem Ausgangsstrom der Solarbatterie (101), um das Tastverhältnis des Steuersignals zum Anpassen des Ausgangsstroms des Solarstromerzeugungssystems innerhalb eines vorgegebenen Einstellbereichs eines ersten Sollstromwertes anzupassen zu berechnen, wobei der erste Sollstromwert für die erste PI-Anpassung als ein anfänglicher Sollwert zuzüglich des ersten Wertes M1 berechnet wird, wobei der erste Wert M1 gleich dem voreingestellten Stromwert IΔ ist;
Erfassen des Ausgangsstroms und der Ausgangsspannung der Solarbatterie (101) nach der ersten PI-Anpassung, und Berechnen einer ersten Ausgangsleistung P1 der Solarbatterie (101);
Erfassen eines Wertes des Ausgangsstroms der Solarbatterie (101), und Verarbeiten einer zweiten PI-Anpassung gemäß dem zweiten Wert M2, dem Ausgangsstrom der Solarbatterie (101) und dem ersten Sollstromwert, um das Tastverhältnis des Steuersignals zum Anpassen des Ausgangsstroms des Solarstromerzeugungssystems innerhalb eines vorgegebenen Einstellbereichs eines zweiten Sollstromwertes zu berechnen, wobei der zweite Sollstromwert für die zweite PI-Anpassung als der erste Sollwert zuzüglich des zweiten Wertes M2 berechnet wird, wobei der zweite Wert M2 gleich -2 mal dem voreingestellten Stromwert IΔ ist;
Erfassen des Ausgangsstroms und der Ausgangsspannung der Solarbatterie (101) nach der zweiten PI-Anpassung, und Berechnen einer zweiten Ausgangsleistung P2 der Solarbatterie (101);
Vergleichen der ersten Ausgangsleistung P1 nach der ersten PI-Anpassung und der zweiten Ausgangsleistung P2 nach der zweiten PI-Anpassung, und Berechnen eines dritten Wertes M3 gemäß dem Vergleichsergebnis und dem voreingestellten Stromwert IΔ; und
Erfassen des Wertes des Ausgangsstroms der Solarbatterie (101), Verarbeiten einer dritten PI-Anpassung gemäß dem dritten Wert M3, dem Ausgangsstrom der Solarbatterie (101) und dem zweiten Sollstromwert, um das Tastverhältnis des Steuersignals zum Anpassen des Ausgangsstroms des Solarstromerzeugungssystems innerhalb eines vorgegebenen Einstellbereichs eines dritten Sollstromwertes zu berechnen, wobei der dritte Sollstromwert für die dritte PI-Anpassung als der zweite Sollwert zuzüglich des dritten Wertes M3 berechnet wird, wobei der dritte Wert M3, in einem Fall, in dem P1 größer als P2 ist, gleich IΔ + k * abs(P2 - P1) ist, wobei k ein Koeffizient ist und Werte im Bereich von 0 bis 1 liegen, oder, in einem Fall, in dem P1 kleiner als oder gleich P2 ist, gleich IΔ - k * abs(P2 - P1) ist,
wobei die erste PI-Anpassung, die zweite PI-Anpassung oder die dritte PI-Anpassung Folgendes umfasst:
Berechnen eines Sollstromwertes Io gemäß dem ersten Wert M1, dem zweiten Wert M2 oder dem dritten Wert M3;
Berechnen eines Eingangswertes PIin der PI-Anpassung gemäß dem Sollstromwert Io und dem Ausgangsstrom Iin der Solarbatterie (101), wobei PIin = Io - Iin;
Berechnen eines proportionalen PIper und eines integralen PIsum der PI-Anpassung gemäß dem Eingangswert PIin, wobei PIper = PIin * Kp, PIsum = PIin * Ki;
Berechnen eines Ausgangswertes PIout der PI-Anpassung gemäß dem PIper und dem PIsum, wobei PIout = PIin + PIsum; und
Berechnen des Tastverhältnisses des Steuersignals gemäß PIout.

## Revendications

1. Dispositif de suivi des points d'alimentation maximum pour système de génération électrique solaire qui comporte une batterie solaire (101) et un convertisseur DC/DC (102) connecté à la batterie solaire (101), le dispositif de suivi des points d'alimentation maximum comprenant :
un module d'échantillonnage (103) connecté par système électronique à une borne de sortie de la batterie solaire (101) et conçu pour détecter une valeur de courant de sortie et une valeur de tension de sortie de la batterie solaire (101) ;
un module de commande (105) connecté au module d'échantillonnage (103) et conçu pour :
calculer une valeur de courant cible en fonction de la valeur de courant de sortie et de la valeur de tension de sortie de la batterie solaire (101) et d'une valeur de courant préétablie ; et
émettre un signal de commande pour contrôler la valeur d'un courant en fonction du courant de sortie de la batterie solaire (101) et de la valeur de courant cible ; et
un module d'entraînement (104) connecté par système électronique au convertisseur DC/DC (102) et au module de commande (105), le module d'entraînement (104) étant conçu pour :
recevoir le signal de commande de la part du module de commande (105) ; et
émettre un signal d'entraînement vers le convertisseur DC/DC (102) pour ajuster une valeur de courant de sortie de la batterie solaire (101) dans une plage d'ajustement prédéfinie de la valeur de courant cible, et pour ajuster un courant de sortie du convertisseur DC/DC (102),
**caractérisé en ce que** le module de commande (105) est en outre conçu pour de :
fixer une valeur de courant préétablie IΔ et émettre une première valeur M1 et une deuxième valeur en fonction de la valeur de courant préétablie IΔ ;
détecter une valeur du courant de sortie de la batterie solaire (101), et procéder à un premier ajustement PI proportionnel-intégral en fonction de la première valeur M1 et du courant de sortie de la batterie solaire (101) pour calculer le cycle de charge du signal de commande pour ajuster le courant de sortie du système de génération électrique solaire dans une plage d'ajustement prédéfinie d'une première valeur de courant cible, la première valeur de courant cible pour le premier ajustement PI étant calculée sous forme d'une valeur cible initiale plus la première valeur M1, la première valeur M1 étant égale à la valeur de courant préétablie IΔ ;
détecter le courant de sortie de la tension de sortie de la batterie solaire (101) après le premier ajustement PI et calculer un premier courant de sortie P1 de la batterie solaire (101) ;
détecter une valeur du courant de sortie de la batterie solaire (101), et procéder à un deuxième ajustement PI en fonction de la deuxième valeur M2, du courant de sortie de la batterie solaire (101) et de la première valeur de courant cible pour calculer le cycle de charge du signal de commande pour ajuster le courant de sortie du système de génération électrique solaire dans une plage d'ajustement prédéfinie d'une deuxième valeur de courant cible, la deuxième valeur de courant cible pour le deuxième ajustement PI étant calculée sous forme de la première valeur cible plus la deuxième valeur M2, la deuxième valeur M2 étant égale à moins 2 fois la valeur de courant préétablie IΔ ;
détecter le courant de sortie et la tension de sortie de la batterie solaire (101) après le deuxième ajustement PI, et calculer un second courant de sortie P2 de la batterie solaire (101) ;
comparer le premier courant de sortie P1 après le premier ajustement PI et le second courant de sortie P2 après le deuxième ajustement PI, et calculer une troisième valeur M3 en fonction du résultat de la comparaison et de la valeur de courant préétablie IΔ ; et
détecter la valeur du courant de sortie de la batterie solaire (101), procéder à un troisième ajustement PI en fonction de la troisième valeur M3, du courant de sortie de la batterie solaire (101), et de la deuxième valeur de courant cible pour calculer le cycle de charge du signal de commande pour ajuster le courant de sortie du système de génération électrique solaire dans une plage d'ajustement prédéfinie d'une troisième valeur de courant cible, la troisième valeur de courant cible, la troisième valeur de courant cible pour le troisième ajustement PI étant calculée sous forme de la deuxième valeur cible plus la troisième valeur M3, la troisième valeur M3 étant égale à IΔ + k * abs(P2 - P1) dans un cas dans lequel P1 est supérieur à P2, k étant un coefficient et les valeurs allant de 0 à 1, ou égale à IΔ - k * abs(P2 - P1) dans un cas dans lequel P1 est inférieur ou égal à P2,
le module de commande (105) étant en outre conçu pour traiter le premier ajustement PI, le second ajustement PI ou le troisième ajustement PI en :
calculant une valeur de courant cible Io en fonction de la première valeur M1, de la deuxième valeur M2, ou de la troisième valeur M3 ;
calculant une valeur d'entrée PIin de l'ajustement PI en fonction de la valeur de courant cible et du courant de sortie Iin de la batterie solaire (101), sachant que PIin = Io - Iin ;
calculant une proportionnelle PIper et une intégration PIsum de l'ajustement PI en fonction de la valeur d'entrée PIin, sachant que PIper = PIin * Kp, PIsum = in * Ki ;
calculant une valeur de sortie PIout de l'ajustement PI en fonction de la PIper et de la PIsum, sachant que PIout = PIin + PIsum ; et
calculant le cycle de charge du signal de commande en fonction de PIout.

2. Procédé de suivi du courant maximum d'un système de génération électrique solaire, ce procédé comprenant :
la détection d'un courant de sortie et d'une tension de sortie d'une batterie solaire (101) ;
le calcul d'une valeur de courant cible en fonction du courant de sortie et de la tension de sortie de la batterie solaire (101) et d'une valeur de courant préétablie ; et
l'émission d'un signal de commande pour ajuster une valeur d'un courant de sortie du système de génération électrique solaire dans une plage d'ajustement prédéfinie de la valeur de courant cible en fonction du courant de sortie de la batterie solaire (101) et de la valeur de courant préétablie,
**caractérisé en ce que** le procédé comprend en outre :
la fixation d'une valeur de courant préétablie IΔ et l'émission d'une première valeur M1 et d'une deuxième valeur M2 en fonction de la valeur de courant préétablie IΔ ;
la détection d'une valeur du courant de sortie de la batterie solaire (101), et le fait de procéder à un premier ajustement PI proportionnel-intégral en fonction de la première valeur M1 et du courant de sortie de la batterie solaire (101) pour calculer le cycle de charge du signal de commande pour ajuster le courant de sortie du système de génération électrique solaire dans une plage d'ajustement prédéfinie d'une première valeur de courant cible, la première valeur de courant cible pour le premier ajustement PI étant calculée sous forme d'une valeur cible initiale plus la première valeur M1, la première valeur M1 étant égale à la valeur de courant préétablie IΔ ;
la détection du courant de sortie et de la tension de sortie de la batterie solaire (101) après le premier ajustement PI et le calcul d'un premier courant de sortie P1 de la batterie solaire (101) ;
la détection d'une valeur du courant de sortie de la batterie solaire (101), et le fait de procéder à un deuxième ajustement PI en fonction de la deuxième valeur M2, du courant de sortie de la batterie solaire (101) et de la première valeur de courant cible pour calculer le cycle de charge du signal de commande pour ajuster le courant de sortie du système de génération électrique solaire dans une plage d'ajustement prédéfinie d'une deuxième valeur de courant cible, la deuxième valeur de courant cible pour le deuxième ajustement PI étant calculée sous forme de la première valeur cible plus la deuxième valeur M2, la deuxième valeur M2 étant égale à moins 2 fois la valeur de courant préétablie IΔ ;
la détection du courant de sortie et de la tension de sortie de la batterie solaire (101) après le deuxième ajustement PI, et le calcul d'un second courant de sortie P2 de la batterie solaire (101) ;
la comparaison du premier courant de sortie P1 après le premier ajustement PI et du second courant de sortie P2 après le deuxième ajustement PI, et le calcul d'une troisième valeur M3 en fonction du résultat de la comparaison et de la valeur de courant préétablie IΔ ; et
la détection de la valeur du courant de sortie de la batterie solaire (101), le fait de procéder à un troisième ajustement PI en fonction de la troisième valeur M3, du courant de sortie de la batterie solaire (101), et de la deuxième valeur de courant cible pour calculer le cycle de charge du signal de commande pour ajuster le courant de sortie du système de génération électrique solaire dans une plage d'ajustement prédéfinie d'une troisième valeur de courant cible, la troisième valeur de courant cible pour le troisième ajustement PI étant calculée sous forme de la deuxième valeur cible plus la troisième valeur M3, la troisième valeur M3 étant égale à IΔ + k * abs(P2 - P1) dans un cas dans lequel P1 est supérieur à P2, k étant un coefficient et les valeurs allant de 0 à 1, ou égale à IΔ - k * abs(P2 - P1) dans un cas dans lequel P1 est inférieur ou égal à P2,
le premier ajustement PI, le second ajustement PI ou le troisième ajustement PI comprenant :
le calcul d'une valeur de courant cible Io en fonction de la première valeur M1, de la deuxième valeur M2, ou de la troisième valeur M3 ;
le calcul d'une valeur d'entrée PIin de l'ajustement PI en fonction de la valeur de courant cible et du courant de sortie Iin de la batterie solaire (101), sachant que PIin = Io - Iin ;
le calcul d'une proportionnelle PIper et d'une intégration PIsum de l'ajustement PI en fonction de la valeur d'entrée PIin, sachant que PIper = PIin * Kp, PIsum = PIin * Ki ;
le calcul d'une valeur de sortie PIout de l'ajustement PI en fonction de la PIper et de la PIsum, sachant que PIout = PIin + PIsum ; et
le calcul du cycle de charge du signal de commande en fonction de PIout.
